# EUROPÄISCHE PATENTSCHRIFT

(11) **EP 2 503 190 B1**
(45) Veröffentlichungstag und Bekanntmachung des Hinweises auf die Patenterteilung: **08.07.2015**
(21) Anmeldenummer: 11194483.1
(22) Anmeldetag: 20.12.2011
(51) Int. Cl.: F16H 47/04, F16H 57/028

(54) **Hydromechanisches Getriebe**
Hydro-mechanical transmission
Engrenage hydromécanique

(30) Priorität: 25.03.2011 DE 102011015234
(43) Veröffentlichungstag der Anmeldung: 26.09.2012
(73) Patentinhaber: Claas Industrietechnik, 33106 Paderborn (DE)
(72) Erfinder: Ratzke, Michael, 33332 Gütersloh (DE); Gohde, Thomas, 33181 Bad Wünnenberg (DE)

(56) Entgegenhaltungen:
- EP-A1- 0 902 213
- DE-A1- 4 022 049
- DE-A1- 4 300 456
- DE-A1- 19 933 822

## Beschreibung

Die vorliegende Erfindung betrifft ein stufenloses hydromechanisches Getriebe, insbesondere zur Verwendung im Antriebsstrang eines landwirtschaftlichen Fahrzeugs wie etwa eines Traktors.

Ein hydromechanisches Getriebe umfasst herkömmlicherweise ein mechanisches Verzweigungsgetriebe wie etwa ein Planetengetriebe und ein hydrostatisches Getriebe mit zwei hydrostatischen Einheiten, die in einem Fluidkreislauf miteinander verbunden sind und von denen jeweils eine als Pumpe und die andere als Motor arbeitet. Indem z.B. durch Schwenken eines Zylinderblocks einer Einheit gegen eine Drehscheibe, an der die Kolben des Zylinderblocks angreifen, das Schluckvolumen wenigstens einer dieser beiden hydrostatischen Einheiten variiert wird, ist eine stufenlose Verstellung der Übersetzung des hydrostatischen Getriebes realisierbar, und indem das hydrostatische Getriebe mit einem Ausgleichsanschluss des Verzweigungsgetriebes drehverbunden ist, beeinflusst es die Drehzahl einer Ausgangswelle des Verzweigungsgetriebes proportional zu seinem eigenen Übersetzungsverhältnis.

Die hydrostatischen Einheiten tragen erheblich zum Betriebsgeräusch eines hydromechanischen Getriebes bei. Da sich das Geräuschspektrum eines hydrostatischen Getriebes erheblich von dem üblicher Verbrennungsmotoren und Getrieben unterscheidet, ist das Fahrgeräusch eines Fahrzeugs mit hydromechanischem Antrieb selbst auf stark befahrenen Straßen auffällig und wird als störend empfunden.

Aus der DE 43 00 456 A1 sowie der DE 199 33 822 A1 sind stufenlose leistungsverzweigte Getriebe bekannt geworden, deren Hydraulikmodule in dem sie umfassenden Getriebe mittels elastischer Elemente gelagert sind. Auf diese Weise wird eine die Geräusche erheblich reduzierende Schwingungsdämpfung erzielt. Aus der gattungsgemäßen EP 0 902213 A1 ist auch der dem Hydromodul zugeordnete Ventilblock im Bereich der in seinem Inneren angeordneten Fluidführung schwingungsgedämpft gelagert. Damit wird eine weitere Reduzierung des Geräuschpegels erreicht.

Aufgabe der Erfindung ist daher, ein hydromechanisches Getriebe mit reduziertem Betriebsgeräusch zu schaffen.

Die Aufgabe wird gemäß den oberbegrifflichen und kennzeichnenden Merkmalen des Anspruches 1 gelöst. So kann die Übertragung von Schwingungen vom hydrostatischen Getriebe auf das Gehäuse unterdrückt werden, und das Gehäuse wirkt nicht oder allenfalls in geringem Umfang als Resonanzboden, der die Schwingungen des hydrostatischen Getriebes in die Umgebung abstrahlt.

Das Gehäuse kann auch vom hydrostatischen Getriebe selber abgestrahlten Luftschall dämpfen, wenn es das hydrostatische Getriebe kapselartig umgibt.

Die Verbindung zwischen Gehäuse und dem hydrostatischen Getriebe muss wenigstens teilweise elastisch und belastbar genug sein, um den zwischen dem hydrostatischen Getriebe und der Umgebung wirkenden An- und Abtriebskräften standhalten zu können. Eine solche Verbindung wird erfindungsgemäß durch Stifte gebildet, die mit einer die Schwingungen des hydrostatischen Getriebes dämpfenden elastischen Hülse umgeben sind.

Für die Dämpfung der Schwingungen ist nicht ausschlaggebend, ob die elastische Hülse jeweils zwischen einem Stift und dem hydrostatischen Getriebe oder zwischen dem Stift und dem Gehäuse angeordnet ist. Für den Fall, das ein Austausch der Hülse erforderlich werden sollte, ist allerdings eine zwischen Stift und Gehäuse angeordnete Hülse im Allgemeinen besser zugänglich.

Zum Schutz der Hülse oder auch, um den Stift in axialer Richtung zu sichern, kann eine Bohrung des Gehäuses, die Stift und Hülse aufnimmt, nach außen durch einen eingeschraubten Deckel verschlossen sein.

Um eine hohe Belastbarkeit zu gewährleisten, ist erfindungsgemäß wenigstens einer der Stifte in sich gegenüberliegenden Wänden des Gehäuses gelagert, und das hydrostatische Getriebe ist zwischen den Wänden an dem Stift befestigt.

Vorzugsweise ist wenigstens ein anderer der Stifte in einer Wand des Gehäuses verschraubt. Ein solcher Stift muss nicht unbedingt zweiseitig gelagert zu sein, um wenigstens einen Teil des Gewichts des hydrostatischen Getriebes tragen zu können. Stattdessen kann ein freies Ende des Stifts in eine Aussparung einer Lagerbrücke des hydrostatischen Getriebes eingreifen. Da dieser Stift das Gehäuse nicht kreuzen muss, ist er flexibler platzierbar als ein durchgehender Stift.

Die elastische Hülse ist bei einem solchen verschraubten Stift vorzugsweise um das freie Ende herum angebracht.

Eine Druckfluidleitung, die sich zwischen dem hydrostatischen Getriebe und dem Gehäuse erstreckt, z.B. um die Stellung von Drehscheibe und Zylinderblock relativ zueinander zu steuern, oder um Hydraulikfluidverluste der hydrostatischen Einheiten auszugleichen, weist erfindungsgemäß, um nicht als Brücke für die Übertragung von Schwingungen zu dienen, zwischen einem am hydrostatischen Getriebe festen Abschnitt und einem am Gehäuse festen Abschnitt wenigstens eine teleskopische und/oder schwenkbare Verbindung auf.

Vorzugsweise ist je eine teleskopische und/oder schwenkbare Verbindung zwischen einem inneren Rohrabschnitt bzw. Ausgleichsabschnitt und dem am hydrostatischen Getriebe festen Abschnitt sowie zwischen dem inneren Rohrabschnitt bzw. Ausgleichsabschnitt und dem am Gehäuse festen Abschnitt vorgesehen. Eine solche Verbindung erlaubt eine Translationsschwingung des hydrostatischen Getriebes relativ zum Gehäuse in drei zueinander orthogonalen Raumrichtungen.

Die teleskopische und/oder schwenkbare Verbindung umfasst erfindungsgemäß jeweils einen äußeren Rohrabschnitt, den mit radialem Spiel in den äußeren Rohrabschnitt auf einer gegebenen Länge eingreifenden inneren Rohrabschnitt und eine Dichtung, die das radiale Spiel zwischen den Rohrabschnitten nur auf einem Bruchteil dieser Länge ausfüllt. Eine solche Dichtung erlaubt sowohl eine Verschiebung der Rohrabschnitte relativ zueinander in deren Längsrichtung, als auch eine Drehung um zur Längsrichtung der Rohrabschnitte orthogonale Achsen.

Um eine Schwingungsübertragung zwischen dem hydrostatischen Getriebe und dem Ausgleichsgetriebe zu vermeiden, ist erfindungsgemäß wenigstens eine Anschlusswelle des hydrostatischen Getriebes mit dem Verzweigungsgetriebe über eine Bogenzahnkupplung, insbesondere drehmomentschlüssig, aber dennoch in Maßen axial beweglich und schwenkbar, verbunden.

Weitere Merkmale und Vorteile der Erfindung ergeben sich aus der nachfolgenden Beschreibung von Ausführungsbeispielen unter Bezugnahme auf die beigefügten Figuren. Es zeigen:
- Fig. 1: eine schematische Darstellung eines hydromechanischen Getriebes, an dem die vorliegende Erfindung anwendbar ist;
- Fig. 2: eine perspektivische Ansicht des hydromechanischen Getriebes;
- Fig. 3: eine perspektivische Ansicht des hydrostatischen Getriebes und eines es umgebenden Gehäuses;
- Fig. 4: einen schematischen Schnitt durch eine erste elastische Verbindung zwischen dem hydromechanischen Getriebe und dem Gehäuse;
- Fig. 5: einen zu Fig. 4 analogen Schnitt durch eine zweite Verbindung des hydromechanischen Getriebes mit dem Gehäuse;
- Fig. 6: eine Durchführung für Hydraulikfluid durch die Wand des Gehäuses; und
- Fig. 7: einen schematischen Längsschnitt durch eine Leitung der Durchführung.

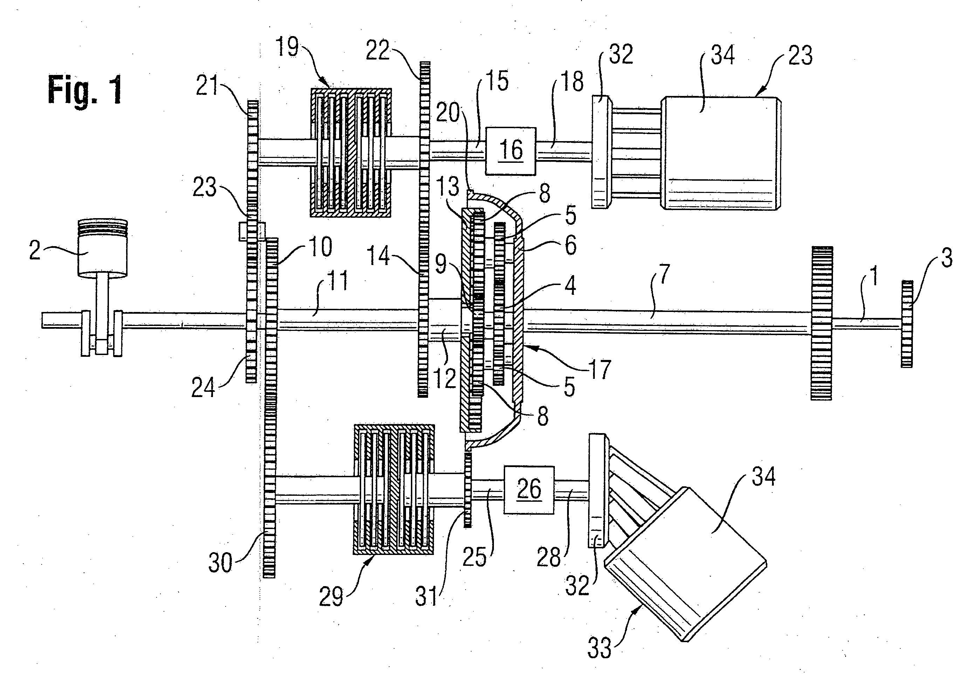

Fig. 1 veranschaulicht in einer schematischen Darstellung Anordnung und Zusammenwirken der beweglichen Teile des erfindungsgemäßen hydromechanischen Getriebes. Eine Antriebswelle 1 des hydromechanischen Getriebes ist mit einem schematisch durch einen an der Antriebswelle 1 angreifenden Kolben angedeuteten Motor 2 verbunden. Die Antriebswelle 1 erstreckt sich längs durch das gesamte Getriebe bis zu einem dem Motor 2 gegenüberliegendem Zapfwellenanschlüss 3. Das Verzweigungsgetriebe umfasst im dargestellten Ausführungsbeispiel ein zweistufiges Planetengetriebe 17, von dem ein Sonnenrad 4 in etwa mittig auf der Antriebswelle 1 befestigt ist. Das Sonnenrad 4 kämmt mit Planetenrädern 5, deren Planetenträger 6 fest mit einer Ausgangswelle 7 des Planetengetriebes 17 verbunden ist. Diese Ausgangswelle 7 ist eine zur Antriebswelle 1 koaxiale Hohlwelle. Der Planetenträger 6 trägt gleichzeitig Planetenräder 8 einer zweiten Stufe des Planetengetriebes 17. Jedes der Planetenräder 8 ist mit einem der Planetenräder 5 drehfest verbünden. Die Planetenräder 8 kämmen einerseits mit einem zweiten Sonnenrad 9, das zusammen mit einem Zahnrad 10 drehfest auf einer zweiten um die Antriebswelle 1 drehbaren Hohlwelle 11 sitzt, und andererseits mit einem Hohlrad 13, das über eine die Hohlwelle 11 umgebende weitere Hohlwelle 12 mit einem Zahnrad 14 verbunden ist.

Der Planetenträger 6 umgibt schüsselförmig die Planetenräder 5, 8 und Sonnenräder 4, 9 und das Hohlrad 13 und ist an seinem Außenumfang, in etwa in einer gleichen Ebene mit dem Hohlrad 13, mit einem Zahnkranz 20 versehen.

Eine erste Vorgelegewelle 15 ist von zwei Hohlwellen mit jeweils einem Zahnrad 21, 22 umgeben und weist eine Kupplung 19 zum wahlweise Ankuppeln eines der Zahnräder 21, 22 an die Vorgelegewelle 15 auf. Eine Bogenzahnkupplung 16 verbindet die erste Vorgelegewelle 15 mit einer Welle 18 einer ersten hydrostatischen Einheit 23. Die Bogenzahnkupplung 16 umfasst in an sich bekannter Weise, wie z.B. in DE-AS 1 208 565, DE-OS 2 355 433 und DE-OS 38 11 790 sowie der GB-A 2 040 397 gezeigt, eine Buchse mit innen liegender Bogenverzahnung und ein Ritzel, das winkel- und radial verlagerbar in die Buchse eingreift. Die Bogenzahnkupplung 16 verbindet die Wellen 15, 18 drehmomentschlüssig und erlaubt dabei eine begrenzte Verschiebung der Wellen 15, 18 zueinander in axialer Richtung sowie Schwenkbewegungen der Wellen 15, 18 relativ zueinander um eine zur Längsrichtung der Vorgelegewelle 15 senkrechte Achse.

Das Zahnrad 22 kämmt mit dem an das Hohlrad 13 gekoppelten Zahnrad 14. Das Zahnrad 21 ist über ein Umkehrrad 23 an ein Zahnrad 24 auf der Antriebswelle 1 gekoppelt.

Analog zur ersten Vorgelegewelle 15 weist auch eine zweite Vorgelegewelle 25 eine Kupplung 29 zum wahlweisen Ankoppeln der Vorgelegewelle 25 an zu ihr koaxiale Zahnräder 30 bzw. 31 auf, und eine Bogenzahnkupplung 26 verbindet die zweite Vorgelegewelle 25 mit einem Wellenabschnitt 28 einer zweiten hydrostatischen Einheit 33.

Die hydrostatischen Einheiten 23, 33 sind an sich bekannte Axialkolbeneinheiten mit einer drehfest mit der jeweiligen Welle 18, 28 verbundenen Drehscheibe 32, an der Kolben eines Zylinderblocks 34 jeweils über Kugelgelenke angreifen. Die Drehung der Drehscheibe 32 treibt eine oszillierende Bewegung der Kolben an, deren Amplitude mit dem Schwenkwinkel des Zylinderblocks 34 relativ zur Welle 18 bzw. 28 zunimmt und das Schl-uckvolumen der betreffenden Einheit 23 bzw. 33 bestimmt. Fig. 1 zeigt die Einheit 23 bei einem minimalen Schwenkwinkel von 0° und die Einheit 33 bei einem maximalen Schwenkwinkel von 45°.

Die Einheiten 23, 33 sind untereinander durch eine in Fig. 1 nicht dargestellte Fluidleitung im Kreis verbunden, so dass von einer der Einheiten 23, 33 gepumptes Hydraulikfluid die jeweils andere Einheit antreibt. Jede der beiden Einheiten 23, 33 kann sowohl als Pumpe als auch als Motor arbeiten, wobei durch Variieren der Schwenkwinkel der hydrostatischen Einheiten 23, 33 die Übersetzung des von den zwei Einheiten 23, 33 gebildeten hydrostatischen Getriebes stufenlos veränderbar ist. Die Übersetzung des gesamten hydromechanischen Getriebes hängt von den Schwenkwinkeln der hydrostatischen Einheiten und von den Stellungen der Kupplungen 19, 29 ab. Die Stellung der Kupplung 19 bestimmt das Vorzeichen der Übersetzung, d.h. die Drehrichtung der Ausgangswelle 7. Die Kupplung 29 ermöglicht das Umschalten zwischen schneller und langsamer Fahrt bei gleichbleibender Richtung.

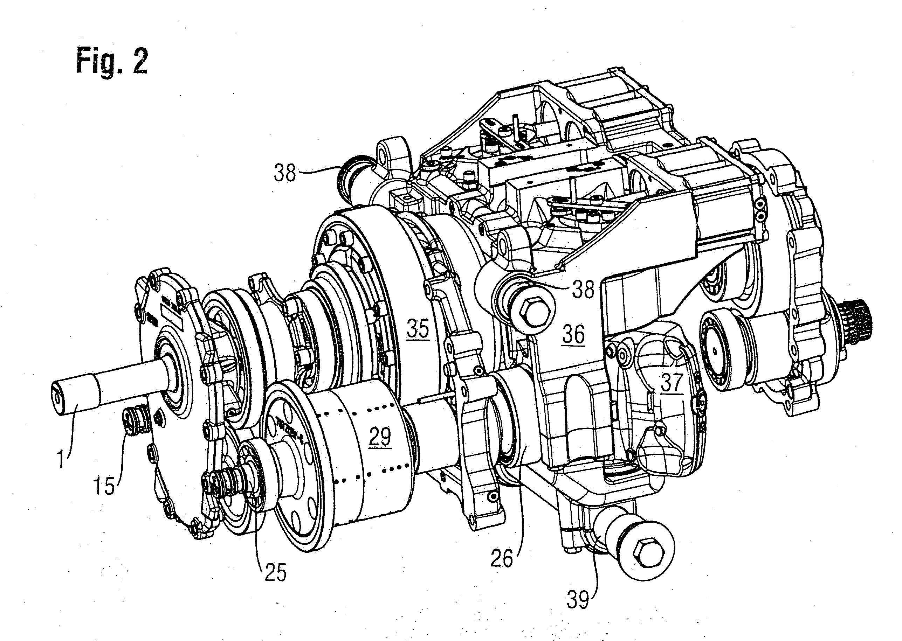

Fig. 2 zeigt eine perspektivische Ansicht des mit Bezug auf Fig. 1 beschriebenen Getriebes. Den rechten Teil der Darstellung der Fig. 2 nimmt das Verzweigungsgetriebe mit den Vorgelegewellen 15, 25 und dem Planetengetriebe 17 ein. Das Planetengetriebe 17 sowie das mit dem Zahnkranz 20 kämmende Zahnrad 31 der Vorgelegewelle 25 sind in einem Gehäuse 35 verbogen.

In einer Lagerbrücke 36 sind (in der Fig. nicht sichtbar) Lager untergebracht, die, die Wellen 18, 28 der hydrostatischen Einheiten 23, 33 halten. An der vom Verzweigungsgetriebe abgewandten Seite der Lagerbrücke 36 sind zwei Gehäuse 37 um vertikal durch die Drehscheiben 32 verlaufende Achsen schwenkbar angelenkt, die jeweils den Zylinderblock 34 einer der beiden hydrostatischen Einheiten 23, 33 aufnehmen. In Fig. 2 ist nur das Gehäuse 37 der Einheit 33 sichtbar. Die Druckfluidleitung, die die hydrostatischen Einheiten 23, 33 miteinander verbindet, verläuft durch Bohrungen innerhalb der Lagerbrücke 36.

Die Lagerbrücke 36 ist in einem in Fig. 2 nicht gezeigten schallisolierenden äußeren Gehäuse befestigt. Zur Befestigung der Lagerbrücke 36 im äußeren Gehäuse dienen horizontal, quer zu den Wellen 1, 15, 25 orientierte und jeweils in Bohrungen der Lagerbrücke 36 bzw. des äußeren Gehäuses eingreifende Stifte 38, 39.

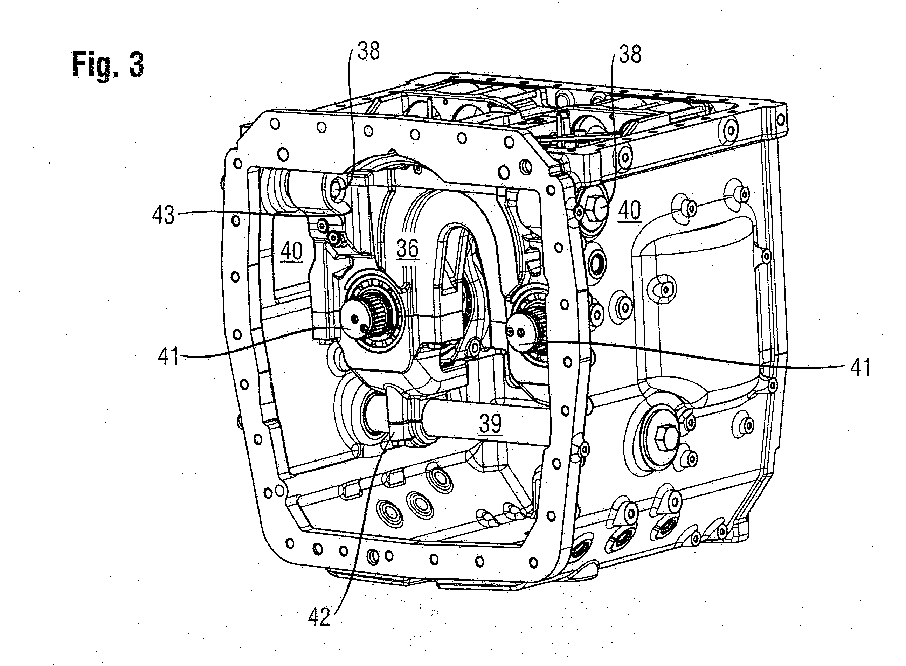

Fig. 3 zeigt in einer perspektivischen Ansicht die Lagerbrücke 36 und ein sie umgebendes äußeres Gehäuse 40, das vorgesehen ist, um mit einem nicht gezeigten, das Verzweigungsgetriebe umgebenden äußeren Gehäuse zu einer das gesamte hydromechanische Getriebe umschließenden schallisolierenden Kapsel zusammengefügt zu werden. Die Lagerbrücke 36 hat hier im Wesentlichen die Gestalt eines Rundbogens, dessen Enden nach unten durch zwei gedrungene Säulen verlängert sind, welche die Lager der Wellenabschnitte 18 bzw. 28 aufnehmen. Die Wellen 18, 28 sind im Innern der Säulen verborgen; zwei an der Vorderseite der Säulen der Lagerbrücke 36 sichtbare außen verzahnte Wellenstümpfe 41 bilden jeweils dieRitzel der oben erwähnten Bogenzahnkupplungen 16 bzw. 26. Die Bogenzahnkupplungen 16, 26 vervollständigende Buchsen mit zu den Wellenstümpfen 41 komplementären Aussparungen befinden sich an den Enden der in Fig. 3 nicht gezeigten Vorgelegewellen 15, 25.

Der untere der Stifte, 39, erstreckt sich quer durch das Gehäuse 40 und ist in Bohrungen von einander gegenüberliegenden Seitenwänden des Gehäuses 40 verankert. Die Lagerbrücke 36 ist an dem Stift 39 mittels zweier die unteren Enden der Säulen bildender, den Stift 39 klemmender Schellen 42 fixiert, von denen eine, unterhalb der hydrostatischen Einheit 23, durch das Gehäuse 40 verborgen ist. Die Stifte 38 erstrecken sich jeweils nur durch eine Seitenwand des Gehäuses 40 und sind in einer Bohrung 43 der Lagerbrücke 36 aufgenommen.

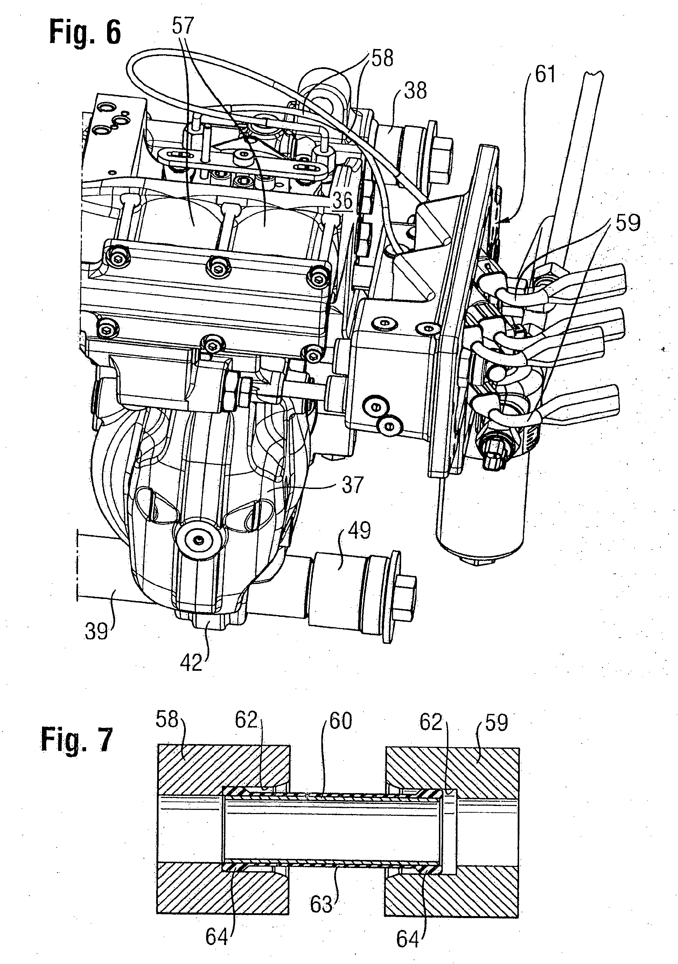

An einer vom Betrachter abgewandten Seitenwand des Gehäuses 40 ist ein Fenster ausgespart. In dem Fenster ist ein Durchführungsrahmen 61 montiert, dessen Funktion später in Verbindung mit Fig. 6 erläutert wird.

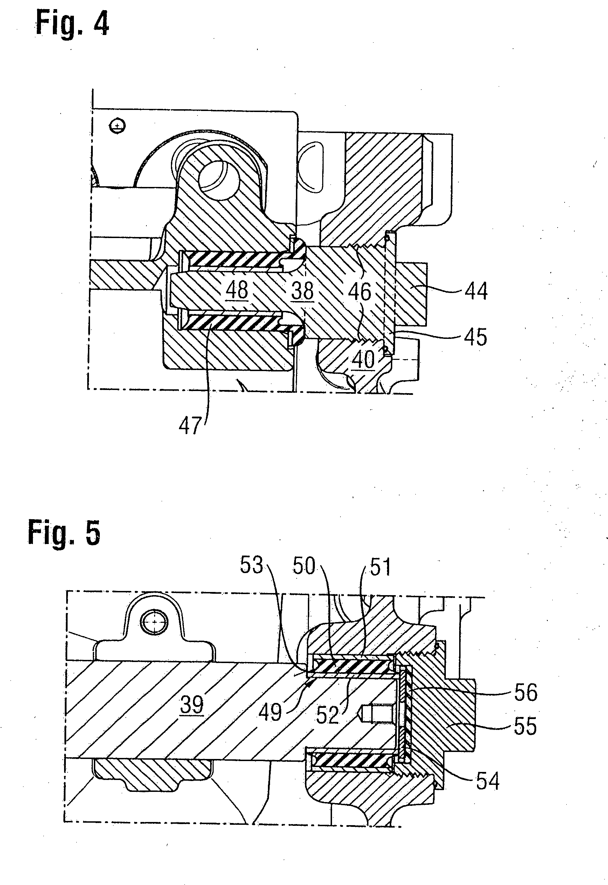

Fig. 4 zeigt einen Schnitt durch einen der sich jeweils nur durch eine Seitenwand des Gehäuses 40 erstreckenden Stifte 38. Der Stift 38 umfasst von außen nach innen einen Schraubsechskant 44, einen mit einem Dichtring versehenen, an Gehäuse 40 anliegenden Flansch 45, einen Gewindeabschnitt 46, der den Stift 38 in der Wand des Gehäuses 40 fixiert, einen Abschnitt mit Wellenpassung, der eine genaue Positionierung des Stiftes 38 im Gehäuse 40 erlaubt, sowie einen in die Bohrung 43 der Lagerbrücke 36 eingreifenden, von einer Elastomerhülse 47 umgebenen Endabschnitt 48. Während der Stift 38 starr mit dem Gehäuse 40 verbunden ist, erlaubt die Elastomerhülse 47 Bewegungen der Lagerbrücke 36 relativ zum Stift 38 und folglich auch relativ zum Gehäuse 40.

Fig. 5 zeigt einen Schnitt durch den unteren, sich durch beide Seitenwände des Gehäuses 40 erstreckenden Stift 39. Die Schellen 42 greifen ohne eine dazwischen liegende Elastomerschicht an dem unteren Stift 39 an. Stattdessen ist auf die geringfügig verjüngten Enden des Stifts 39 jeweils eine sogenannte Ultrabuchse 49 aufgeschoben, die in an sich bekannter Weise jeweils eine Elastomerschicht 50 zwischen starren äußeren und inneren Hülsen 51, 52 aufweist. Die Ultrabuchse 49 ist am Stift 39 fixiert durch Klemmung ihrer inneren Hülse 52 zwischen einer Schulter 53 des Stifts 39 und einer am Ende des Stifts angeschraubten Platte 54. Der Stift 39 ist in dem Gehäuse 40 in axialer Richtung fixiert durch zwei Deckel 55, die von außen in die Bohrungen des Gehäuses 40 eingeschraubt sind, in die der Stift 39 von innen eingreift. Zwischen jedem Ende des Stifts und dem ihm gegenüberliegenden Deckel ist jeweils eine Elastomerscheibe 56 eingeklemmt. Die Elastomerscheibe 56 ist in axialer Richtung des Stifts 39 geringfügig stauchbar und erlaubt zusammen mit der Ultrabuchse 49 gedämpfte Schwingbewegungen des Stifts 39 relativ zum Gehäuse 40 in drei Raumrichtungen.

Fig. 6 veranschaulicht die Ölversorgung des hydrostatischen Getriebes. Versorgungsleitungen für Hydrauliköl sind von der Lagerbrücke 36 durch das Gehäuse 40 herausgeführt, einerseits, um Ölverluste der hydrostatischen Einheiten 23, 33 kontinuierlich ausgleichen zu können, andererseits, um über hydraulische Stellglieder die Schwenkwinkel der Zylinderblöcke der beiden Einheiten 23, 33 einstellen zu können. Fig. 6 zeigt in einer perspektivischen Ansicht zwei dieser Stellglieder 57, die oberhalb des von ihnen gesteuerten Gehäuses 37 der hydrostatischen Einheit 23 an der Lagerbrücke 36 montiert sind. Das Gehäuse 40 ist in Fig. 6 weggelassen, gezeigt ist lediglich der bereits in Fig. 3 gezeigte Durchführungsrahmen 61, der das Fenster des Gehäuses 40 dicht ausfüllt. Die Versorgungsleitungen müssen einigermaßen starrwandig sein, um hohe Innendrücke auszuhalten, doch je starrer sie sind, um so effizienter übertragen auch sie Schwingungen der hydrostatischen Einheiten 23, 33 auf das Gehäuse 40. Um eine Schwingungsübertragung auch über die Versorgungsleitungen zu vermeiden, ist zwischen einem an der Lagerbrücke festen Leitungsabschnitt 58 und einem am Durchführungsrahmen 61 festen Leitungsabschnitt 59 eine Verbindung vom in Fig. 7 im Längsschnitt gezeigten Typ vorgesehen. Die Abschnitte 58, 59 sind hier an ihren Enden jeweils zu einer Muffe 62 aufgeweitet, in die ein starrwandiges Rohrstück 60 mit Spiel in axialer und radialer Richtung eingreift. Das Rohrstück 60 ist auf seiner ganzen Länge mit einem Elastomerüberzug 63 versehen, der an den Enden jeweils zu einem an der Innenfläche der Muffe 62 dicht anliegenden Wulst 64 verdickt ist. Die axiale Ausdehnung des Bereichs, in dem der Wulst 64 die Muffe 62 berührt, ist erheblich kleiner als der Durchmesser der Muffe 62, so dass das Rohrstück 60 sich nicht nur in Längsrichtung gegen die Muffen 62 bewegen, sondern auch in beiden Muffen. 62 um kleine Winkel schwenken kann. Die Muffen 62 und darin eingreifenden Enden des Rohrstücks 60 bilden so jeweils eine teleskopische und schwenkbare Verbindung. Auch die Leitungsabschnitte 58, 59 sind folglich gegeneinander in drei Raumrichtungen beweglich und übertragen keine Schwingungen der hydrostatischen Einheiten 23, 33 auf das Gehäuse 40.

### Bezugszeichen

- 1: Antriebswelle
- 2: Motor
- 3: Zapfwellenanschluss
- 4: Sonnenrad
- 5: Planetenrad
- 6: Planetenträger
- 7: Ausgangswelle
- 8: Planetenrad
- 9: Sonnenrad
- 10: Zahnrad
- 11: Hohlwelle
- 12: Hohlwelle
- 13: Hohlrad
- 14: Zahnrad
- 15: Vorgelegewelle
- 16: Bogenzahnkupplung
- 17: Planetengetriebe
- 18: Wellenabschnitt
- 19: Kupplung
- 20: Zahnkranz
- 21: Zahnrad
- 22: Zahnrad
- 23: hydrostatische Einheit
- 24: Zahnrad
- 25: Vorgelegewelle
- 26: Bogenzahnkupplung
- 27 28: Wellenabschnitt
- 29: Kupplung
- 30: Zahnrad
- 31: Zahnrad
- 32: Drehscheibe
- 33: hydrostatische Einheit
- 34: Zylinderblock
- 35: Gehäuse
- 36: Lagerbrücke
- 37: Gehäuse
- 38: Stift
- 39: Stift
- 40: äußeres Gehäuse
- 41: Wellenstumpf
- 42: Schelle
- 43: Bohrung
- 44: Schraubsechskant
- 45: Flansch
- 46: Gewindeabschnitt
- 47: Elastomerhülse
- 48: Endabschnitt
- 49: Ultrabuchse
- 50: Elastomerschicht
- 51: äußere Hülse
- 52: innere Hülse
- 53: Schulter
- 54: Platte
- 55: Deckel
- 56: Elastomerscheibe
- 57: Stellglied
- 58: Leitungsabschnitt
- 59: Leitungsabschnitt
- 60: Rohrstück
- 61: Durchführungsrahmen
- 62: Muffe
- 63: Elastomerüberzug
- 64: Wulst

## Patentansprüche

1. Hydromechanisches Getriebe mit einem in einem Gehäuse (40) aufgenommenen mechanischen Verzweigungsgetriebe (4-31) und einem mit dem Verzweigungsgetriebe (4-31) zusammenwirkenden stufenlos verstellbaren hydrostatischen Getriebe (23, 33), wobei das hydrostatische Getriebe (23, 33) zumindest mit dem Gehäuse (40) über Dämpfungselemente (47; 50; 64) nachgiebig verbunden ist, wobei eine Druckfluidleitung (58, 59, 60) vorgesehen ist, die zwischen einem am hydrostatischen Getriebe (23,33) festen Abschnitt (58) und einem am Gehäuse (40) festen Abschnitt (59) wenigstens eine teleskopische und/oder schwenkbare Verbindung aufweist, wobei die Verbindung (60, 62, 64) einen äußeren Rohrabschnitt (62), einen mit radialem Spiel in den äußeren Rohrabschnitt (62) auf einer Länge eingreifenden inneren Rohrabschnitt (60) und eine das radiale Spiel auf einem Bruchteil der Länge ausfüllende Dichtung (64) umfasst, wobei
das hydrostatische Getriebe (23, 33) mit dem Gehäuse (40) über von einer elastischen Hülse (47; 50) umgebene Stifte (38; 39) verbunden ist, **dadurch gekennzeichnet, dass** wenigstens einer der Stifte (39) in sich gegenüberliegenden Wänden des Gehäuses (40) gelagert ist und das hydrostatische Getriebe (23, 33) zwischen den Wänden an dem wenigstens einen Stift (39) befestigt ist, und dass wenigstens eine Anschlusswelle (18; 28) des hydrostatischen Getriebes (23, 33) mit dem Verzweigungsgetriebe (4-31) über eine Bogenzahnkupplung (16; 26) verbunden ist.

2. Hydromechanisches Getriebe nach Anspruch 1, **dadurch gekennzeichnet, dass** die elastischen Hülsen (50) jeweils zwischen einem der Stifte (39) und dem Gehäuse (40) angeordnet sind.

3. Hydromechanisches Getriebe nach Anspruch 2, **dadurch gekennzeichnet, dass** eine Bohrung des Gehäuses (40), die Stift (39) und Hülse (50) aufnimmt, nach außen durch einen eingeschraubten Deckel (55) verschlossen ist.

4. Hydromechanisches Getriebe nach Anspruch 1, **dadurch gekennzeichnet, dass** wenigstens ein anderer der Stifte (38) in einer Wand des Gehäuses (40) verschraubt ist. 4

5. Hydromechanisches Getriebe nach Anspruch 4, **dadurch gekennzeichnet, dass** der letztgenannte Stift (38) einen in eine Aussparung einer Lagerbrücke (36) des hydrostatischen Getriebes eingreifenden freien Endabschnitt (48) hat.

6. Hydromechanisches Getriebe nach Anspruch 5, **dadurch gekennzeichnet, dass** der freie Endabschnitt (48) von der elastischen Hülse (47) umgeben ist.

7. Hydromechanisches Getriebe nach Anspruch 1, **dadurch gekennzeichnet, dass** zwischen dem inneren Rohrabschnitt (60) und dem am hydrostatischen Getriebe (23, 33) festen Abschnitt (58) und zwischen dem inneren Rohrabschnitt (60) und dem am Gehäuse (40) festen Abschnitt (59) je eine teleskopische und/oder schwenkbare Verbindung (60, 62, 64) vorgesehen ist.

## Claims

1. A hydromechanical transmission comprising a mechanical split torque transmission (4-31) accommodated in a housing (40) and a steplessly adjustable hydrostatic transmission (23, 33) cooperating with the split torque transmission (4-31), wherein the hydrostatic transmission (23, 33) is resiliently connected at least to the housing (40) by way of damping elements (47; 50; 64), wherein there is provided a pressure fluid line (58, 59, 60) which has at least one telescopic and/or pivotable connection between a portion (58) fixed to the hydrostatic transmission (23, 33) and a portion (59) fixed to the housing (40), wherein the connection (60, 62, 64) includes an outer tube portion (62), an inner tube portion (60) which engages with radial play into the outer tube portion (62) over a length, and a seal (64) which fills the radial play over a fraction of the length, wherein the hydrostatic transmission (23, 33) is connected to the housing (40) by way of pins (38; 39) surrounded by an elastic sleeve (47; 50), **characterised in that** at least one of the pins (39) is mounted in mutually opposite walls of the housing (40) and the hydrostatic transmission (23, 33) is fixed between the walls on the at least one pin (39), and that at least one connecting shaft (18; 28) of the hydrostatic transmission (23, 33) is connected to the split torque transmission (4-31) by way of a curved tooth coupling (16; 26).

2. A hydromechanical transmission according to claim 1 **characterised in that** the elastic sleeves (50) are respectively arranged between one of the pins (39) and the housing (40).

3. A hydromechanical transmission according to claim 2 **characterised in that** a bore in the housing (40) which receives pin (39) and sleeve (50) is closed outwardly by a screwed-in cover (55).

4. A hydromechanical transmission according to claim 1 **characterised in that** at least another of the pins (38) is screwed in a wall of the housing (40).

5. A hydromechanical transmission according to claim 4 **characterised in that** the last-mentioned pin (38) has a free end portion (48) engaging into an opening in a mounting bridge (36) of the hydrostatic transmission.

6. A hydromechanical transmission according to claim 5 **characterised in that** the free end portion (48) is surrounded by the elastic sleeve (47).

7. A hydromechanical transmission according to claim 1 **characterised in that** provided between the inner tube portion (60) and the portion (58) fixed to the hydrostatic transmission (23, 33) and between the inner tube portion (60) and the portion (59) fixed to the housing (40) is a respective telescopic and/or pivotable connection (60, 62, 64).

## Revendications

1. Transmission hydromécanique comprenant un engrenage de dérivation mécanique (4-31) logé dans un carter (40) et une transmission hydrostatique (23, 33) réglable en continu coopérant avec l'engrenage de dérivation (4-31), la transmission hydrostatique (23, 33) étant reliée de façon élastique au moins au carter (40) par l'intermédiaire d'éléments d'amortissement (47 ; 50 ; 64), une conduite de fluide sous pression (58, 59, 60) étant prévue, laquelle présente au moins une liaison télescopique et/ou pivotante entre une portion fixe (58) sur la transmission hydrostatique (23, 33) et une portion fixe (59) sur le carter (40), la liaison (60, 62, 64) comprenant une portion de tube extérieure (62), une portion de tube intérieure (60) s'engageant sur une longueur dans la portion de tube extérieure (62) avec un jeu radial, et un joint (64) remplissant le jeu radial sur une partie de la longueur, la transmission hydrostatique (23, 33) étant reliée au carter (40) par des broches (38 ; 39) entourées par un manchon élastique (47 ; 50), **caractérisée en ce qu'**au moins une des broches (39) est logée dans des parois opposées du carter (40) et la transmission hydrostatique (23, 33) est fixée entre les parois à ladite au moins une broche (39), et **en ce qu'**au moins un arbre de raccordement (18 ; 28) de la transmission hydrostatique (23, 33) est relié à l'engrenage de dérivation (4-31) par un accouplement à denture courbe (16 ; 26).

2. Transmission hydromécanique selon la revendication 1, **caractérisée en ce que** les manchons élastiques (50) sont chaque fois disposés entre une des broches (39) et le carter (40).

3. Transmission hydromécanique selon la revendication 2, **caractérisée en ce qu'**un perçage du carter (40) qui reçoit la broche (39) et le manchon (50) est fermé vers l'extérieur par un couvercle vissé (55).

4. Transmission hydromécanique selon la revendication 1, **caractérisée en ce qu'**au moins une autre des broches (38) est vissée dans une paroi du carter (40).

5. Transmission hydromécanique selon la revendication 4, **caractérisée en ce que** la broche (38) mentionnée en dernier lieu possède une portion d'extrémité libre (48) qui s'engage dans un évidement d'un pont de palier (36) de la transmission hydrostatique.

6. Transmission hydromécanique selon la revendication 5, **caractérisée en ce que** la portion d'extrémité libre (48) est entourée par le manchon élastique (47).

7. Transmission hydromécanique selon la revendication 1, **caractérisée en ce qu'**une liaison télescopique et/ou pivotante (60, 62, 64) est prévue chaque fois entre la portion de tube intérieure (60) et la portion fixe (58) sur la transmission hydrostatique (23, 33) et entre la portion de tube intérieure (60) et la portion fixe (59) sur le carter (40).
